# EUROPEAN PATENT SPECIFICATION

(11) **EP 2 738 023 B1**
(45) Date of publication and mention of the grant of the patent: **02.09.2015**
(21) Application number: 13194757.4
(22) Date of filing: 28.11.2013
(51) Int. Cl.: B60C 23/12

(54) **Pump and actuator assembly for a self-inflating tire**
Pumpen- und Aktuatoranordnung für einen selbstaufblasenden Reifen
Ensemble de pompe et actionneur pour pneu autogonflant

(30) Priority: 30.11.2012 US 201213689858
(43) Date of publication of application: 04.06.2014
(73) Proprietor: The Goodyear Tire & Rubber Company, Akron, Ohio 44316 (US)
(72) Inventor: Peronnet-Paquin, Anne Therese, L-2566 Luxembourg (LU); Deerenberg, Edwin, L-9047 Ettelbruck (LU); Hinque, Daniel Paul Luc Marie, B-6720 Habay-la-Neuve (BE)
(74) Representative: Kutsch, Bernd

(56) References cited:
- EP-A1- 2 468 540
- EP-A1- 2 502 760

## Description

### Field of the Invention

The invention relates generally to tires, in particular self-inflating tires, and, more specifically, to a self-inflating tire having an integrated air pumping system.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate a self-inflating feature within a tire that will self-inflate the tire.

EP-A- 2 468 540 describes a tire in accordance with the preamble of claim 1.

### Summary of the Invention

The invention relates to a tire in accordance with claim 1.

Dependent claims refer to preferred embodiments of the invention.

In a first preferred aspect of the present invention, the tire has a tire cavity, first and second sidewalls extending respectively from first and second tire beads to a common tire tread, and a compression actuator means mounted to the tire within the tire cavity for delivering air to the tire cavity. The compression actuator means includes a hollow containment body formed from a resilient deformable material and containing a quantity of a non-compressible medium. The hollow containment body reciprocally deforms or transforms between a deformed state and a non-deformed state responsive to deformation and recovery of the tire while rotating. The hollow containment body in the deformed state displaces a quantity of the non-compressible medium for generating a compression force from which a volume of air is delivered to the tire cavity. The hollow containment body is shaped to facilitate pivoting during rotation of the tire.

According to another preferred aspect of the tire, the hollow containment body operationally undergoes one cyclic deformation between the deformed state and the non-deformed state within one rotation of the tire.

According to still another preferred aspect of the tire, the cyclic deformation of the hollow containment body occurs in either a forward or rearward direction of tire rotation.

According to yet another preferred aspect of the tire, a relief valve is mounted to the tire for releasing air from the tire cavity should the tire cavity air pressure exceed a preset tire inflation pressure.

According to still another preferred aspect of the tire, the deformation of the hollow containment body is induced by a bending of one of the first and second sidewalls.

According to yet another preferred aspect of the tire, a pump assembly is affixed to one of the first and second sidewalls. The pump assembly includes a compressor body affixed to the hollow containment body and has an air chamber. The air chamber has an inlet opening for admitting air into the air chamber and an outlet opening for conducting air from the air chamber to the tire cavity. The compressor body further includes a first valve means and a second valve means preferably within the compressor body for reciprocally opening and closing the inlet opening and the outlet opening, respectively, synchronously with cyclic deformation of the hollow containment body.

According to still another preferred aspect of the tire, a relief valve means releases air from the tire cavity when air pressure within the tire cavity exceeds a predetermined pressure. The relief valve means is affixed to the hollow containment body and includes a relief valve and an air flow passageway from the relief valve positioned to operationally reverse flow air from the tire cavity through the compressor body and out of the inlet opening of the hollow containment body.

According to yet another preferred aspect of the tire, the first and second valve means operate as a first one-way valve and a second one-way valve, respectively, positioned at separate locations in the air chamber of the compressor body.

According to still another preferred aspect of the tire, the first valve means includes a piston member seated within air chamber of the compressor body. The piston member cyclically moves between open and closed positions synchronous with cyclic deformation of the hollow containment body. The piston member operatively opens and obstructs the inlet opening of the compressor body.

According to one embodiment of the tire, the hollow containment body has a first linear region and a second linear region both facing the tire cavity. Conjunction of the two linear regions facilitates pivoting of the hollow containment body and compression of the medium when the sidewall is proximate a footprint of the tire.

According to a second embodiment of the tire, the hollow containment body has a first curved region, a second notched region, and a third linear region all facing the tire cavity. The second notched region facilitates pivoting of the hollow containment body and compression of the medium when the sidewall is proximate a footprint of the tire.

According to another embodiment of the tire, the hollow containment body has internal notched regions and external notched regions. The internal and external notched regions facilitate pivoting of the hollow containment body and compression of the medium when the sidewall is proximate a footprint of the tire.

In a preferred aspect of the present invention, the tire has a tire cavity defined by an inner liner, first and second sidewalls extending, respectively, from first and second tire beads to a tread, a compression actuator means mounted within the tire cavity for delivering air to the tire cavity, the compression actuator means including a containment body formed from a resilient deformable material and containing a quantity of a non-compressible medium, the containment body affixed to one of the first and second sidewalls and reciprocally deforming or transforming with the sidewall between a deformed state and a non-deformed state responsive to deformation and recovery of the tire sidewall of the rotating tire, the containment body, in the deformed state, displacing the non-compressible medium thereby generating a compression force delivering a volume of air to the tire cavity, the containment body operationally undergoing a cyclic deformation between the deformed state and the non-deformed state responsive to rotation of the tire, the containment body being shaped to facilitate pivoting during rotation of the tire, and a pump assembly connected to the containment body and mounted within the tire cavity. The pump assembly includes a compressor body with an air chamber. The air chamber has an inlet opening for admitting air into the air chamber and an outlet opening for conducting a pressurized quantity of air from the air chamber to the tire cavity. The compressor body is attached to one of the first and second sidewalls radially inward from the containment body.

According to another embodiment of the tire, a clamp member facilitates pivoting of the containment body and compression of the medium when the sidewall is proximate a footprint of the tire.

### Definitions

"Axial" and "axially" means lines or directions that are parallel to the axis of rotation of the tire.

"Circumferential" means lines or directions extending along the perimeter of the surface of the annular tread perpendicular to the axial direction.

"Footprint" means the contact patch or area of contact of the tire tread with a flat surface at zero speed and under normal load and pressure.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
FIG. 1 is a schematic perspective view of the tire showing a pump location in accordance with the present invention.
FIG. 2 is a schematic sectional view of the tire of FIG. 1.
FIG. 3 is a schematic sectional view taken through the example pump shown in FIG. 1 under a first condition.
FIG. 4 is a schematic sectional view taken through the example pump of FIG. 1 under a second condition.
FIG. 5 is a schematic perspective view of another example pump in accordance with the present invention.
FIG. 6 is a schematic sectional view of the example pump of FIG. 5 under a first condition.
FIG. 7 is a schematic sectional view of the example pump of FIG. 5 under a second condition.
FIG. 8 is a schematic side view of part of still another example pump in accordance with the present invention.
FIG. 9 is a schematic front view of the example part of FIG. 8.
FIG. 10 is a schematic side view of part of yet another example pump in accordance with the present invention.
FIG. 11 is a schematic front view of the example part of FIG. 10.
FIG. 12 is a schematic side view of part of still another example pump in accordance with the present invention.
FIG. 13 is a schematic front view of the example part of FIG. 12.
FIG. 14 is a schematic sectional view of part of yet another example pump in accordance with the present invention under a first condition.
FIG. 15 a schematic sectional view of the example part of FIG. 14 under a second condition.

### Detailed Description of Examples of the Present Invention

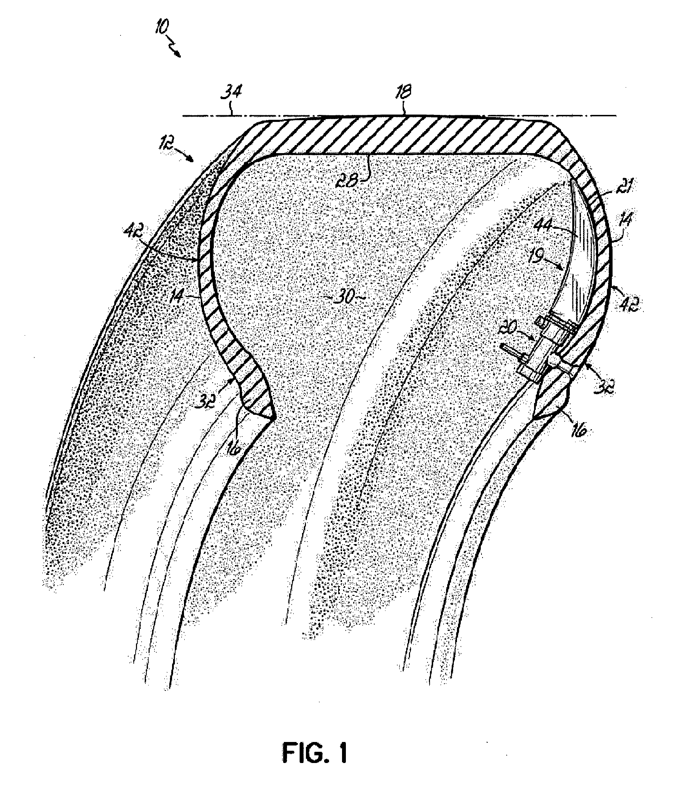

Referring to FIGS. 1-15, an example Self-Inflating Tire System 10, or Air Maintenance Tire System, in accordance with the present invention has a tire 12 with a carcass having a pair of sidewalls 14, a pair of beads 16, and a tread 18. The tire 12 is preferably configured to be self-inflating by inclusion of a pump assembly 20 and coupled compression actuator assembly 19, both of which may be attached to the tire 12 in a post-cure assembly procedure. As shown in FIG. 1, the assembly 19 may be mounted to one sidewall 14 by application of adhesive as shown by the adhesive area 21. The tire 12 mounts to a rim (not shown) having a tire mounting surface and an outer rim flange extending from the tire mounting surface. The tire 12 may further include an inner liner component 28 defining and enclosing an internal air cavity 30. Adhesive may be applied to the sidewall region of the inner liner 28 as depicted by the adhesive area 21. The tire 12 further includes lower sidewall regions 32 proximate to the beads 16 of the tire.

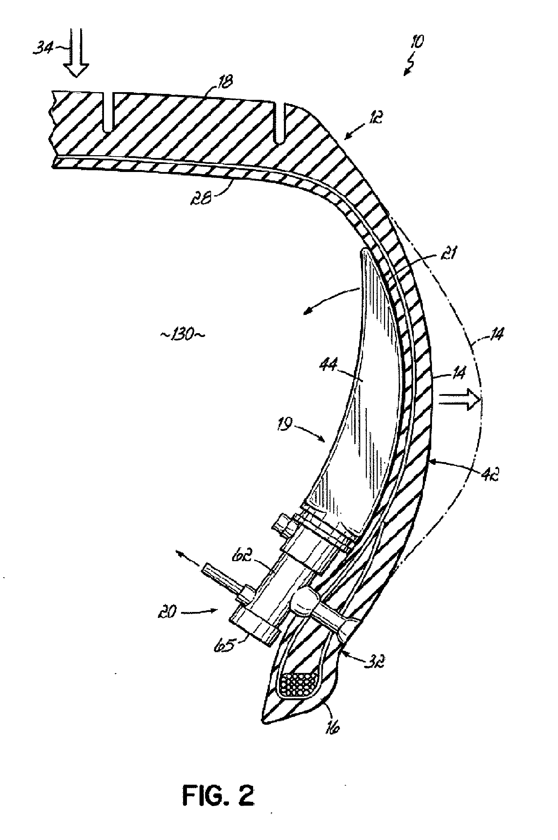

The tire 12 mounts to a vehicle and then engages a ground surface 34. Contact area between the tire 12 and the ground surface 34 represents a tire footprint (as defined above). The compression actuator assembly 19 may mount to a sidewall region 42 of the tire 12 having a relatively high flex-deformation as the tire rotates and contacts the ground surface 34 as shown in FIGS. 2-4. As the tire 12 rotates, the compression actuator assembly 19 and pump assembly 20 rotate with the tire. The compression actuator assembly 19 is subjected to compression forces resulting from the sidewall 14 flexing and/or bending when the compression actuator assembly is adjacent the tire footprint, as explained below.

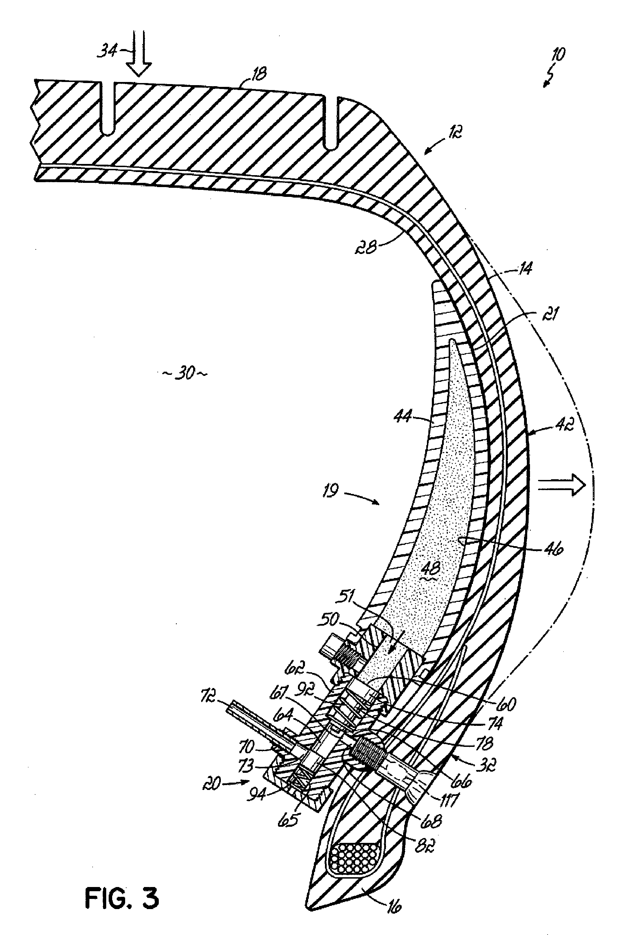

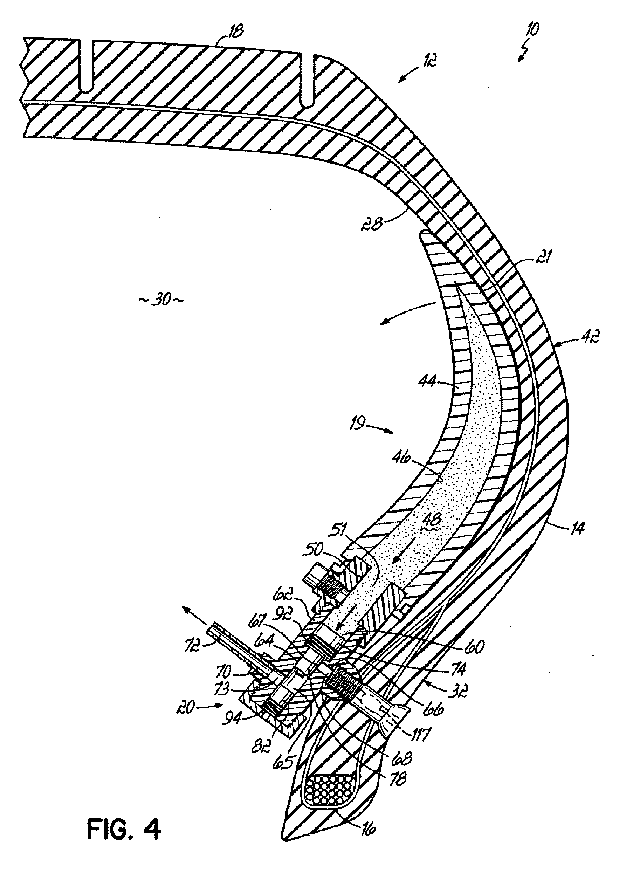

FIG. 3 shows the compression actuator assembly 19 and pump assembly 20 in a location in a non-compressed area of the tire 12, while FIG. 4 shows the assemblies 19, 20 in a compressed area of the tire. In the position of FIG. 4, the compression actuator assembly 19 is subjected to the compression forces generated within tire footprint by the contact surface 34. The tire 12 may rotate in a first direction and in an opposite second direction during normal operation of a vehicle and the system 10. As such, the coupled assemblies 19, 20 may rotate with the tire 12 in both directions and may be subjected to compression/bending forces generated within the sidewall 14 in both the first and second rotational directions.

As shown in FIGS. 1-4, the compression actuator assembly 19 includes an elongate hollow containment body 44 formed from a resilient deformable material composition, such as, for example, a thermoplastic resin and/or rubber compound. The elongate body 44 is thus be capable of reciprocally and resiliently undergoing a cyclic deformation into a deformed state (FIG. 4) when subjected to bending force by the contact surface 34 and recovery into an original non-deformed state (FIG. 3). The elongate body 44 of FIGS. 1-4 may be sized and shaped to follow the inner contour of the tire sidewall 14 and innerliner 28 from proximate the tread 18 to proximate a bead 16. The hollow, elongate form of the containment body 44 may be affixed to the inner liner 28 of the tire 12 at the adhesive region 21 or modified further for incorporation into the tire sidewall 14, as explained below.

The containment body 44 includes an enclosed central reservoir cavity 46 filled with a volume of a non-compressible medium 48 (FIGS. 3 & 4). The medium 48 may be in foam and/or fluid form. The medium 48 may include water with an antifreeze additive. The medium 48 is enclosed by the body 44 within the cavity 46 and may generally fill the cavity. The containment body 44 includes an outlet conduit 50 preferably extending generally axially from the containment body and preferably containing an inner outlet conduit bore 51 through which a displaced quantity of the medium 48 may travel in reciprocal directions. The conduit 50 may extend to a leading end 60.

Positioned as shown in FIGS. 2-4, the containment body 44 is subjected to bending forces from the tire sidewall 14 as the region of the sidewall to which the containment body attaches passes proximate to the tire footprint and is compressed by forces from the contact surface 34 on the tread 18 (FIG. 4). Bending forces applied to bend the sidewall region 14 may cause a commensurate bending deformation of the medium 48 and the containment body 44, as shown in FIG. 4. The deformation introduced into the containment body 44 by the bending tire sidewall 14 proximate to the tire footprint thus causes displacement of a quantity of the medium 48 along the outlet conduit 50 toward the leading end 60. Pressure from the displaced medium 48 acts as a pressure actuator to the pumping assembly 20, as explained below. When the tire sidewall 14 to which the containment body 44 attaches rotates away from the tire footprint, such as a position at the upper part of the tire 12, the compression force in the sidewall 14 may thus be removed/lessoned, causing a commensurate removal/lessoning of bending force into the containment body 44. Removal of the bending force allows the containment body 44 to resume its original, non-deformed state (FIG. 3) and the medium 48 to recede within the conduit 50 in a direction away from the leading end 60.

This cycle of sidewall bending and unbending translates into a cyclic deformation and restoration of the containment body 44 as the tire 12 rotates in either forward or reverse directions and generates a cyclic compression force from the displaced medium 48 along the conduit 50. The compression force from the displaced medium 48 may be proportionate to the pressure generated by the displaced quantity of the non-compressible medium in the direction of the displaced medium 48.

The pump assembly 20 is preferably affixed to the carcass of the tire 12 at a location adjacent the compression actuating assembly 19, for example, in an inward radial direction relative to compression actuating assembly. The pumping assembly 20 may include a hollow compressor body 62 of generally tubular form with an internal, axially oriented air chamber 64 (FIG. 3) extending to a lower chamber end 65. The air chamber 64 is accessible through an inlet conduit 66 which intersects the air chamber at an inlet opening 67. The compressor body 62 and inlet conduit 66 may be formed of a rigid material, such as metal or plastic. The inlet conduit 66 may be generally elongate and tubular having an inlet axial passageway 68 communicating with the air chamber 64 via the inlet opening 67. On an opposite side of the compressor body 62, an outlet conduit 70 of generally tubular form may have an axial passageway 72 extending therethrough and communicating with the air chamber 64 at an outlet opening 73. The inlet conduit 66 and the outlet conduit 70 may be longitudinally offset, with inlet conduit 66 nearest the actuating assembly 19 and the outlet conduit 70 farther away from the actuating assembly.

A first cylindrical piston member 74 is sized for sliding within a first /upper end of the axial air chamber 64 of the compressor body 62. A piston projection 78 may extend longitudinally through the axial air chamber 64 and away from the leading end 60 of the conduit 50. The piston projection 78 functions as a collector for air which may be ejected from the pump assembly 20. A first coil spring 92 may surround the piston projection 78 and seat against a lower surface of the piston 74 and a ridge about the wall of the first/upper end of the axial air chamber 64 thereby biasing the piston 74 toward the leading end 60.

A second cylindrical piston member 82 is sized for sliding within a second/lower end of the axial air chamber 64 of the compressor body 62. The second piston member 82 may have a cylindrical body matching the axial air chamber 64. A second coil spring 94 may be provided within the lower end 65 of the axial air chamber 64 within the compressor body 62. The second coil spring 94 may seat against the second/lower end of the axial air chamber 64 and a lower surface of the piston member 82. Longitudinal travel of the piston member 82 within the axial air chamber 64 may be limited by a stop surface located just an the other side of the outlet opening 73. The second spring 94 thereby biases the piston member 82 against the stop surface and biases the piston member to a position closing the outlet opening from the axial air chamber 64.

Extending from the outlet conduit 50 may be a relief valve intake channel (not shown) that may relieve excess medium pressure within the compressor body 62. A pressure regulating relief valve assembly may mount to the intake channel and extend from the compressor body 62.

Seated within the inlet axial passageway 68, there is preferably a porous filter component 117 that functions to filter out particulates from entering the inlet axial passageway. As described above, the actuation assembly 19 may be incorporated into a region of the sidewall 14 of the tire 12 that experiences a high bending load as the tire rotates. The actuation assembly 19 may either be incorporated within the sidewall 14 or affixed to the sidewall 14 by adhesive, as shown at 21. In the externally mounted assembly approach shown in FIG. 1, the containment body 44 may be complementarily shaped and curved as the sidewall region to which it attaches and extends generally from a radially outward end proximate the tread region 18 radially inward along the sidewall attachment region 21 to a radially inward end proximate a bead region.

The pumping assembly 20 may attach to an inward end of the actuation assembly 19 by adhesive or other suitable attachment means. The coupled actuation assembly 19 and pumping assembly 20 may mount by adhesive attachment to the inner liner 28 of the tire 12 with the pumping assembly 20 proximate to the carcass bead/lower sidewall region 32. So positioned, the inlet passageway 68 projects in a generally axial direction through the tire sidewall 14 to an external air-accessible outer tire sidewall side location. Position of the inlet passageway 68 may be radially outward, or above, the rim flange so that the rim flange does not interfere with intake air entering the inlet passageway of the pumping assembly 20.

The outlet conduit 50 of the compression assembly 19 may couple to the upper end of the pump assembly 20 as the outlet conduit sealingly engages the upper end of the pump assembly. Once the assemblies 19, 20 are attached to each other, they are attached to a region of the tire sidewall 14, as described above.

FIGS. 3 & 4 depict the operation in sequence of the pump assembly 20 and compression actuator assembly 19. FIG. 3 shows the pump assembly 20 with the pistons 74, 82 in at rest positions. The position shown correlates with a position of the assemblies 19, 20 mounted to a rolling tire at a rotational position opposite from the tire footprint (e.g., at the top of the rotating tire 12). The sidewall 14 area supporting assemblies 19, 20 when opposite the tire footprint is therefore not flexed or bent from the contact with ground surface. Accordingly, the compression actuator body 44 has no bending deformation generally correlating with the curvature of the unbent sidewall 14 and the unbent compression actuator body. The medium 48 enclosed within the body 44 is generally at rest and contacts the leading surface 60 within the conduit 50 against the upper end of piston 74. The piston 74 may be biased against the leading surface 60 by the first spring 92.

In the "at rest" position of FIG. 3, the piston projection 78 is longitudinally above the inlet opening 67 of the inlet conduit 66. As a result, air from outside of the tire 12 is admitted through the filter 117 and into the axial air chamber 64. The piston 82 is biased in an axially raised position within the axial air chamber 64 by the spring 94 thereby blocking off the outlet opening 73 of the outlet conduit 70. The springs 92, 94 are under an extended or relatively uncompressed condition limited by the dimensions of the pump assembly 20. The relief valve assemblies are generally in a closed position so long as the medium pressure remains below a predetermined pressure.

As the region of the sidewall 14 carrying the assemblies 19, 20 rotates into a position proximate/adjacent to the tire footprint, the sidewall flexes and bends under load, causing a commensurate flexing of the compression actuator body 44 (FIG. 4). The non-compressible medium 48, a viscoelastic material, in response to the bending of the compression actuator body 44, is forced to flow down within the outlet conduit 50 and exerts a downward pressure on the first piston 74. The leading end surface 60 of the medium 48 bear against the outward/upper surface of the first piston 74 and may overcome the resistance of first spring 92 by compression of first spring thereby allowing the first piston to move lower into the axial air chamber 64. The piston projection 78 thus moves into a position blocking air intake into the axial air chamber 64 through the inlet opening 67 and compresses the volume of air within the axial air chamber 64. The increased pressure within the axial air chamber 64 forces the second piston 82 lower within the axial air chamber 64 and compresses the coil spring 94.

When the piston 82 has moved a sufficient axial distance within the axial air chamber 64, the outlet opening 73 ceases to be obstructed by the piston 82. Pressurized air from the axial air chamber 64 may thus be forced through the outlet opening 73 and into the tire cavity. When the pumping of air is complete and pressure within axial air chamber 64 against the second piston 82 is discontinued (e.g., by further rotation of the tire 12), the piston 82 is forced axially upward and back into the "at rest" position (FIG. 3).

Once removal of the quantity of pressurized air within the axial air chamber 44 into the tire cavity is complete, with further rotation of the tire 12, the assemblies 19, 20 and the attachment region 121 of sidewall 14 leave the high stress position proximate/adjacent the tire footprint and the tire sidewall region 46 resume an unstressed curvature (FIG. 3). The return of the sidewall 14 to an original curvature configuration away from the tire footprint may be accompanied by, and synchronous with, a return of the compression actuator body 44 to an unbent/unstressed configuration. As the compression actuator body 44 resumes its original curvature, and concurrently with the end of the pumping cycle, the second piston 82 moves axially upward under the influence of second spring 94 thereby forcing the second piston 74 in an upward movement. The viscoelastic medium 48 recedes into the original containment form of the compression actuator body 44 and the pumping of air into the tire cavity may be discontinued until the assemblies 19, 20 rotate back into alignment proximate/adjacent the tire footprint.

With each revolution of the tire 12, the pumping of air from the axial air chamber 64 into the tire cavity occurs in cyclic fashion. It will be appreciated that the operation of the air pumping action is independent of the direction of tire revolution and may occur with either a forward or reverse tire rotation.

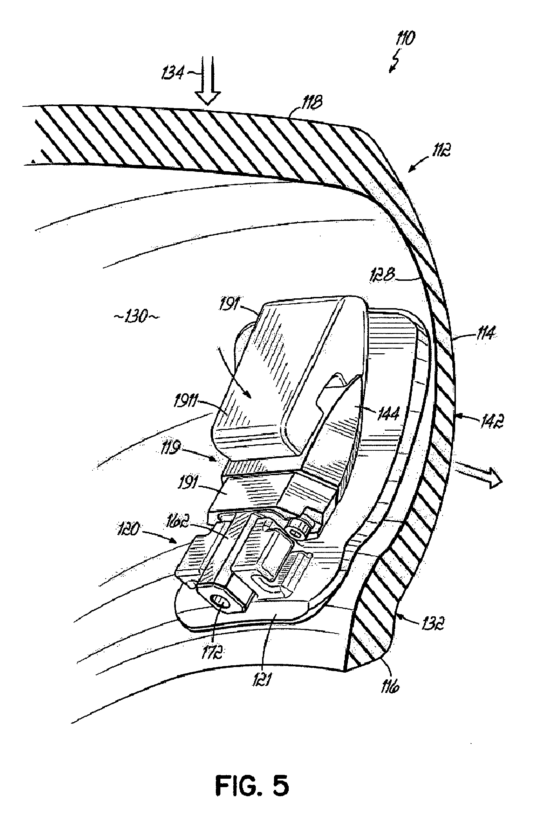

Referring to FIGS. 5-7, another example Self-Inflating Tire System 110, or Air Maintenance Tire System, in accordance with the present invention has a tire 112 having a carcass, a pair of sidewalls 114, a pair of beads 116, and a tread 118. The system 110 may be configured to be self-inflating by inclusion of a pump assembly 120 and a compression actuator assembly 119 coupled thereto, both of which may be attached to the tire 112 in a post-cure assembly procedure. As shown in FIG. 5, the assembly 119 may be mounted to one sidewall 114 by application of an adhesive to a base pad 121. The base pad 121 may then be mounted to the sidewall 114. The tire 112 mounts to a rim (not shown) having a tire mounting surface and an outer rim flange extending from the tire mounting surface. The tire 112 may further include an inner liner component 128 defining and enclosing an internal air cavity 130. Adhesive may be applied to the sidewall region of the inner liner 128 as depicted by the base pad/adhesive area 121. The tire 112 further includes lower sidewall regions 132 proximate to the beads 116 of the tire.

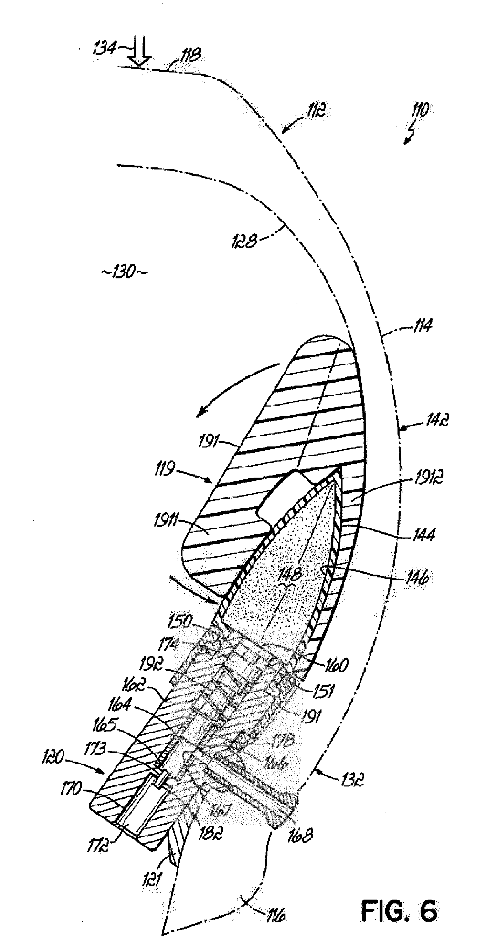

The tire 112 mounts to a vehicle and engages a ground surface 134. Contact area between the tire 112 and the ground surface 134 represents a tire footprint (as defined above). The compression actuator assembly 119 may mount to a sidewall region 142 of the tire 112 having a relatively high flex-deformation as the tire rotates and contacts the ground surface 134 as shown in FIGS. 6-7. The assembly 119 is shaped to facilitate pivoting during rotation of the tire 112. As the tire 112 rotates, the compression actuator assembly 119 and pump assembly 120 rotate with the tire. The compression actuator assembly 119 are subjected to compression forces resulting from the sidewall 114 flexing and/or bending when the compression actuator assembly is adjacent the tire footprint, as explained below.

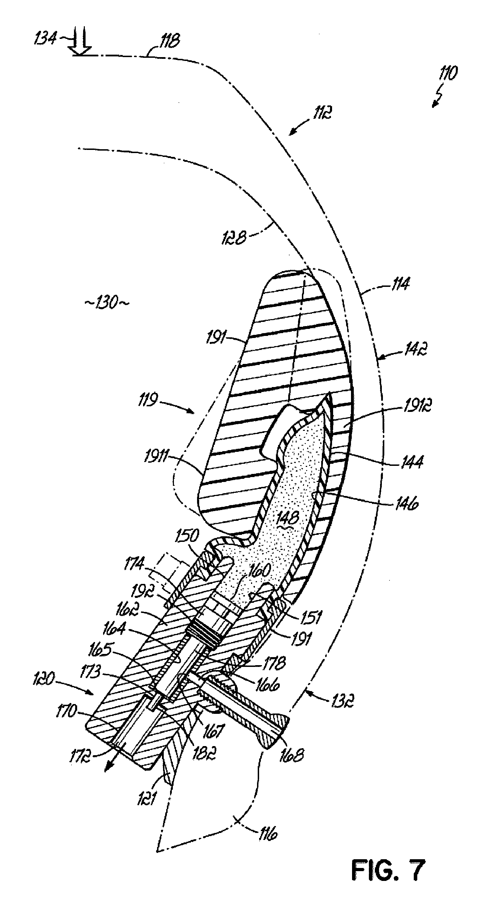

FIG. 6 shows the compression actuator assembly 119 and pump assembly 120 in a location in a non-compressed area of the tire 112, while FIG. 7 shows the assemblies 119, 120 in a compressed area of the tire. In the position of FIG. 7, the compression actuator assembly 119 is subjected to the compression forces generated within the tire footprint by the contact surface 134. The tire 112 may rotate in a first direction and in an opposite second direction during normal operation of a vehicle and the system 110. As such, the coupled assemblies 119, 120 may rotate with the tire 112 in both directions and may be subjected to compression/bending forces generated within the sidewall 114 in both the first and second rotational directions.

As shown in FIGS. 5-7, the compression actuator assembly 119 includes an elongate hollow containment body 144 formed from a resilient deformable material composition, such as, for example, a thermoplastic resin and/or rubber compound. The elongate body 144 is thus capable of reciprocally and resiliently undergoing a cyclic deformation into a deformed state (FIG. 7) when subjected to bending force by the contact surface 134 and recovery into an original non-deformed state (FIG. 6). The elongate body 144 of FIGS. 5-7 is sized and shaped to follow the inner contour of the tire sidewall 114 and innerliner 128 from proximate the tread 118 to proximate a bead 116. The hollow, elongate form of the containment body 144 may be affixed to the inner liner 128 of the tire 112 at the adhesive region 121 or modified further for incorporation into the tire sidewall 114, as explained below.

Alternatively, the system 110 may further include a clamp member 191 for adjusting/facilitating compression of the elongate body 144 during cyclic pumping operation of the system (FIGS. 6-7). The clamp member 191 may be a single piece structure formed from a resilient deformable material composition, such as, for example, a thermoplastic resin and/or rubber compound. Additionally, the clamp member 191 may be a two piece structure including a first piece 1911 formed from a first material and a second piece 1912 formed from a second material different from the first material. Thus, the clamping member 191 may be tuned/tailored accordingly depending upon the desired bending characteristics of the elongate body 144 and/or the clamping member 191.

The tear-drop shaped containment body 144 may include an enclosed central reservoir cavity 146 filled with a volume of a non-compressible medium 148 (FIGS. 6 & 7). The medium 148 may be in foam and/or fluid form. The medium 148 may include water with an antifreeze additive. The medium 148 may be enclosed by the body 144 within the cavity 146 and may generally fill the cavity. The containment body 144 preferably includes an outlet conduit 150 extending generally axially from the containment body and containing an inner outlet conduit bore 151 through which a displaced quantity of the medium 148 may travel in reciprocal directions. The conduit 150 may extend to a leading end 160.

Positioned as shown in FIGS. 6-7, the containment body 144 is subjected to bending forces from the tire sidewall 114 and the clamping member 191 as the region of the sidewall to which the containment body attaches passes proximate/adjacent to the tire footprint and is compressed by forces from the contact surface 134 on the tread 118 (FIG. 7). Bending forces applied to bend the sidewall region 114 and clamping member 191 cause a commensurate bending deformation of the medium 148 and the containment body 144, as shown in FIG. 7. The deformation introduced into the containment body 144 by the bending tire sidewall 114 proximate to the tire footprint thus causes displacement of a quantity of the medium 148 along the outlet conduit 150 toward the leading end 160. Pressure from the displaced medium 148 acts as a pressure actuator to the pumping assembly 120, as explained below. When the tire sidewall 114 to which the containment body 144 attaches rotates away from the tire footprint, such as a position at the upper part of the tire 112, the compression force in the sidewall 114 and clamping member 191 may thus be removed/lessoned, causing a commensurate removal/lessoning of bending force into the containment body 144. Removal of the bending force allows the containment body 144 to resume its original/initial, non-deformed state (FIG. 6) and the medium 148 to recede within the conduit 150 in a direction away from the leading end 160.

This cycle of sidewall bending and unbending translates into a cyclic deformation and restoration of the containment body 144 and clamping member 191 as the tire 112 rotates in either forward or reverse directions and generates a cyclic compression force from the displaced medium 148 along the conduit 150. The compression force from the displaced medium 148 is preferably proportionate to the pressure generated by the displaced quantity of the non-compressible medium in the direction of the displaced medium 148.

The pump assembly 120 may be affixed to the carcass of the tire 112 or base pad 121 at a location adjacent the compression actuating assembly 119, for example, in an inward radial direction relative to compression actuating assembly. The pumping assembly 120 may include a hollow compressor body 162 of generally tubular form with an internal, axially oriented air chamber 164 (FIG. 6) extending to a lower chamber end 165. The air chamber 164 is accessible through an inlet conduit 166 which intersects the air chamber at an inlet opening 167. The compressor body 162 and inlet conduit 166 may be formed of a rigid material, such as metal or plastic. The inlet conduit 166 are generally elongate and tubular having an inlet axial passageway 168 communicating with the air chamber 164 via the inlet opening 167. On an opposite side of the compressor body 162, an outlet conduit 170 of generally tubular form may have an axial passageway 172 extending therethrough and communicating with the air chamber 164 at an outlet opening 173. The inlet conduit 166 and the outlet conduit 170 may be longitudinally and/or radially offset, with inlet conduit 166 nearest the actuating assembly 119 and the outlet conduit 170 farther away from the actuating assembly.

Similar to the system 10, a cylindrical piston member 174 may be sized for sliding within a first /upper end of the axial air chamber 164 of the compressor body 162. A piston projection 178 may extend longitudinally through the axial air chamber 164 and away from the leading end 160 of the conduit 150. The piston projection 178 functions as a collector for air which may be ejected from the pump assembly 120. A coil spring 192 may surround the piston projection 178 and seat against a lower surface of the piston 174 and a ridge about the wall of the first/upper end of the axial air chamber 164 thereby biasing the piston 174 toward the leading end 160.

A miniature check valve 182 may be sized may be disposed within a second/lower end of the axial air chamber 164 of the compressor body 162. The check valve 182 thereby only allows air out of the axial air chamber 164. Extending axially from the outlet conduit 150 may be a relief valve 1 (not shown) (FIG. 5) that relieves excess medium pressure within the compressor body 162.

Seated within the inlet axial passageway 168 may be a porous filter component (not shown) that functions to filter out particulates from entering the inlet axial passageway. As described above, the actuation assembly 119 may be incorporated into a region of the sidewall 114 of the tire 112 that experiences a high bending load as the tire rotates. The actuation assembly 119 may either be incorporated within the sidewall 114 or affixed to the sidewall 114 by adhesive, as shown at 121. In the externally mounted assembly approach shown in FIG. 5, the containment body 144 may be complementarily shaped and curved as the sidewall region to which it attaches and extends generally from a radially outward end proximate the tread region 118 radially inward along the sidewall attachment region 121 to a radially inward end proximate a bead region.

The pumping assembly 120 and clamping member 191 may attach to an inward end of the actuation assembly 119 by adhesive or other suitable attachment means. The coupled actuation assembly 119, pumping assembly 20, and clamping member 191 may mount by adhesive attachment to the inner liner 128 of the tire 112 with the pumping assembly 20 proximate to the carcass bead/lower sidewall region 132. So positioned, the inlet passageway 168 projects in a generally axial direction through the tire sidewall 114 to an external air-accessible outer tire sidewall side location. Position of the inlet passageway 168 may be radially outward, or above, the rim flange so that the rim flange does not interfere with intake air entering the inlet passageway of the pumping assembly 120.

The outlet conduit 150 of the compression assembly 119 may couple to the upper end of the pump assembly 120 as the outlet conduit sealingly engages the upper end of the pump assembly. Once the assemblies 119, 120 are attached to each other, they along with the clamping member 191 may be attached to a region of the tire sidewall 114, as described above.

FIGS. 6 & 7 depict the operation in sequence of the pump assembly 120 and compression actuator assembly 119. FIG. 3 shows the pump assembly 120 with the piston 174 in an "at rest" position. The position shown correlates with a position of the assemblies 119, 120 mounted to a rolling tire at a rotational position opposite from the tire footprint (e.g., at the top of the rotating tire 112). The sidewall 114 area supporting assemblies 119, 120, when opposite the tire footprint, is therefore not flexed or bent from the contact with ground surface. Accordingly, the compression actuator body 144 has no bending deformation generally correlating with the curvature of the unbent sidewall 114 and the unbent compression actuator body. The medium 148 enclosed within the body 144 is generally at rest and contacts the leading surface 160 within the conduit 150 against the upper end of the piston 174. The piston 174 may be biased against the leading surface 160 by the spring 192.

In the "at rest" position of FIG. 6, the piston projection 178 is longitudinally above the inlet opening 167 of the inlet conduit 166. As a result, air from outside of the tire 112 is admitted through the inlet conduit 166 and into the axial air chamber 164. The check valve 182 is biased against inlet of air through the outlet opening 173 of the outlet conduit 170. The spring 192 is under an extended or relatively uncompressed condition limited by the dimensions of the pump assembly 120. The relief valve 1 is generally in a closed position so long as the medium pressure remains below a predetermined pressure.

As the region of the sidewall 114 carrying the assemblies 119, 120 rotates into a position proximate/adjacent to the tire footprint, the sidewall flexes and bends under load, causing a commensurate flexing of the compression actuator body 144 (FIG. 7). The non-compressible medium 148, a viscoelastic material, in response to the bending of the compression actuator body 144, is forced to flow down within the outlet conduit 150 and exerts a downward pressure on the piston 174. The leading end surface 160 of the medium 148 bears against the outward/upper surface of the piston 174 and may overcome the resistance of the spring 192 by compression of first spring thereby allowing the piston to move lower into the axial air chamber 164. The piston projection 178 thus moves into a position blocking air intake into the axial air chamber 164 through the inlet opening 167 and compresses the volume of air within the axial air chamber 164. The increased pressure within the axial air chamber 164 force the check valve 182 into an open/outlet position.

Thus, the outlet opening 173 ceases to be obstructed by the check valve 182. Pressurized air from the axial air chamber 164 is thus forced through the outlet opening 173 and into the tire cavity 130. When the pumping of air is complete and pressure within axial air chamber 164 against the check valve 182 is discontinued (e.g., by further rotation of the tire 112), the check valve returns to its biasedly closed, or "at rest", position (FIG. 3).

Once removal of the quantity of pressurized air within the axial air chamber 144 into the tire cavity 130 is complete, with further rotation of the tire 112, the assemblies 119, 120 and the attachment region or base pad 121 of sidewall 114 leave the high stress position proximate/adjacent the tire footprint and the tire sidewall region may resume an unstressed curvature (FIG. 3). The return of the sidewall 114 to an original curvature configuration away from the tire footprint may be accompanied by, and synchronous with, a return of the compression actuator body 144 and clamping member 191 to an unbent/unstressed configuration. As the compression actuator body 144 resumes its original curvature, and concurrently with the end of the pumping cycle, the check valve 182 closes off the outlet opening 173. The viscoelastic medium 148 recedes into the original containment form of the compression actuator body 144 and the pumping of air into the tire cavity 130 may be discontinued until the assemblies 119, 120 rotate back into alignment proximate/adjacent the tire footprint.

With each revolution of the tire 112, the pumping of air from the axial air chamber 164 into the tire cavity130 may occur in cyclic fashion. It will be appreciated that the operation of the air pumping action is independent of the direction of tire revolution and may occur with either a forward or reverse tire rotation.

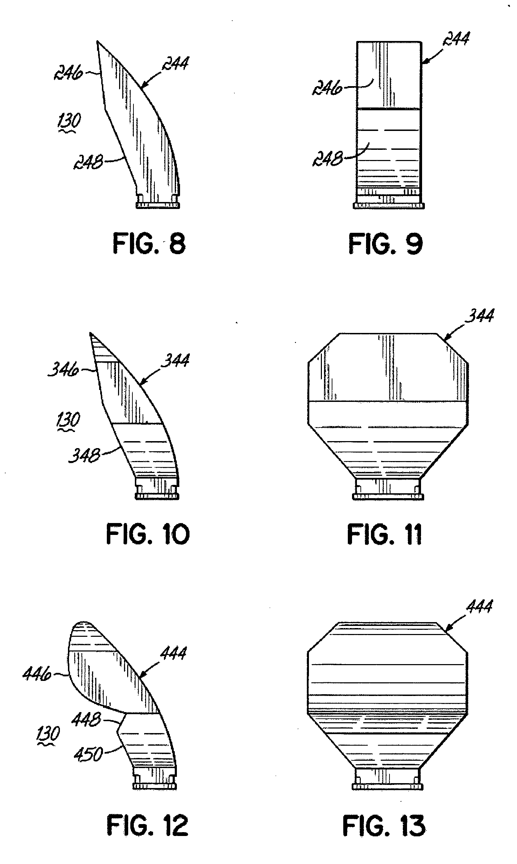

FIG. 8 shows a side view of another compression actuator body 244 in accordance with the present invention for use with the system 110 of FIGS. 5-7. The compression actuator body 244 has a first linear region 246 and a second linear region 248 both facing the tire cavity 130. The conjunction of the two linear regions 246, 248 facilitates pivoting of the compression actuator body 244 and compression of the medium 148 when the sidewall 114 is proximate/adjacent the footprint of the tire 112. FIG. 9 shows a front view of the rectangular or quadrilateral shape of the compression actuator body 244 of FIG. 8.

FIG. 10 shows a side view of another compression actuator body 344 in accordance with the present invention for use with the system 110 of FIGS. 5-7. The compression actuator body 344 has a first linear region 346 and a second linear region 348 both facing the tire cavity 130. The conjunction of the two linear regions 346, 348 facilitates pivoting of the compression actuator body 344 and compression of the medium 148 when the sidewall 114 is proximate/adjacent the footprint of the tire 112. FIG. 11 shows an octagonal front view of the compression actuator body 344 of FIG. 10.

FIG. 12 shows a side view of another compression actuator body 444 in accordance with the present invention for use with the system 110 of FIGS. 5-7. The compression actuator body 444 has a first curved region 346, a second notched region 348, and a third linear region 450 all facing the tire cavity 130. The second notched region 348 facilitates pivoting of the compression actuator body 444 and compression of the medium 148 when the sidewall 114 is proximate/adjacent the footprint of the tire 112. FIG. 13 shows an octagonal front view of the compression actuator body 444 of FIG. 12.

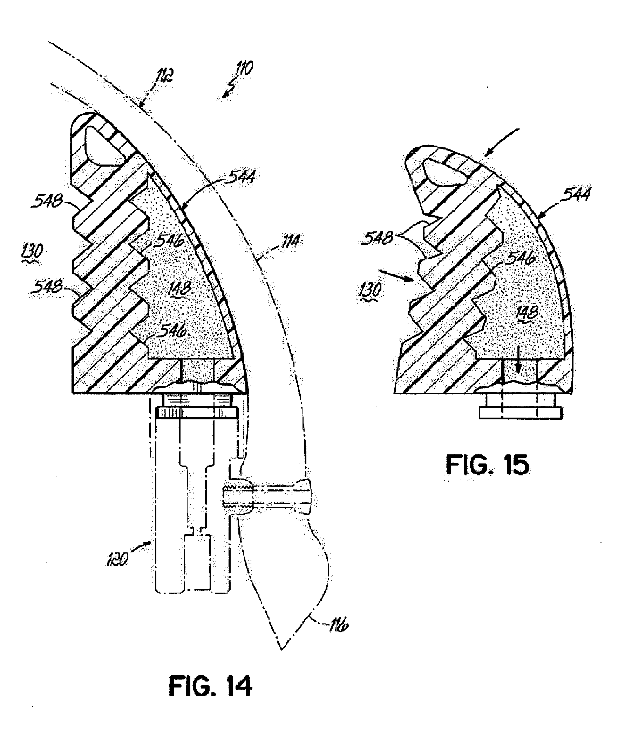

FIG. 14 shows a schematic sectional view of another compression actuator body 544 in accordance with the present invention under an unbent condition for use with the system 110 of FIGS. 5-7. The compression actuator body 544 has internal notched regions 546 and external notched regions 548. Both the internal and external notched regions 546, 548 facilitate pivoting of the compression actuator body 544 and compression of the medium 148 when the sidewall 114 is proximate/adjacent the footprint of the tire 112. FIG. 15 shows the compression actuator body 544 under this bent condition.

## Claims

1. A tire having a tire cavity (30), first and second sidewalls (14) extending respectively from first and second tire beads (16) to a tire tread (18), the tire (12) comprising a compression actuator means (19) mounted to the tire (12) within the tire cavity (30) for delivering air to the tire cavity (30), the compression actuator means (19) comprising a containment body (44) formed from a resilient deformable material composition and containing a quantity of a non-compressible medium (48), wherein the containment body (44) is configured to reciprocally transform between a deformed state and a non-deformed state responsive to a deformation and recovery of the tire (12) when the tire (12) is rotating under load, and wherein the containment body (44), in the deformed state, is configured to displace a quantity of the non-compressible medium (48) for generating a compression force to deliver a volume of air to the tire cavity (30), the containment body (44) being shaped to facilitate pivoting during rotation of the tire (12), **characterized in that**
(i) the containment body (44) has a first linear region and a second linear region both facing the tire cavity (30), conjunction of the two linear regions facilitating pivoting of the containment body (44) and compression of the medium (48) when the sidewall (14) is proximate a footprint of the tire (12); or
(ii) the containment body (44) has a first curved region, a second notched region, and a third linear region all facing the tire cavity (30), the second notched region facilitating pivoting of the containment body (44) and compression of the medium (48) when the sidewall (14) is proximate a footprint of the tire (12); or
(iii) the containment body (44) has internal notched regions and external notched regions, the internal and external notched regions facilitating pivoting of the containment body (44) and compression of the medium (48) when the sidewall (14) is proximate a footprint of the tire (12); or
(iv) the tire further comprises a clamp member (191) for facilitating pivoting of the containment body (44) and compression of the medium (48) when the sidewall (14) is proximate a footprint of the tire (12).

2. The tire of claim 1 wherein the containment body (44) operationally undergoes one cyclic deformation between the deformed state and the non-deformed state within one rotation of the tire (12).

3. The tire as set forth in claim 1 or 2 wherein the cyclic deformation of the containment body (44) occurs in either a forward or rearward direction of tire rotation.

4. The tire as set forth in at least one of the previous claims further comprising a relief valve mounted to the tire (12) for releasing air from the tire cavity (30) in case tire cavity air pressure exceeds a preset tire inflation pressure.

5. The tire as set forth in at least one of the previous claims wherein deformation of the containment body (48) is induced by a bending of one of the first and second sidewalls (14).

6. The tire as set forth in at least one of the previous claims further comprising a pump assembly (120) affixed to one of the first and second sidewalls (14), the pump assembly (120) comprising a compressor body affixed to the containment body (44) and having an air chamber, the air chamber having an inlet opening for admitting air into the air chamber and an outlet opening for conducting air from the air chamber to the tire cavity (30), the compressor body further comprising a first valve means and a second valve means preferably within the compressor body for reciprocally opening and closing the inlet opening and the outlet opening, respectively, synchronously with cyclic deformation of the containment body (44).

7. The tire as set forth in claim 6 further comprising a relief valve means for releasing air from the tire cavity (30) in case air pressure within the tire cavity (30) exceeds a predetermined pressure, the relief valve means being affixed to the compressor body and comprising a relief valve and an air flow passageway from the relief valve positioned to operationally reverse flow air from the tire cavity (30) through the compressor body and out of the inlet opening of the compressor body.

8. The tire as set forth in claim 6 or 7 wherein the first and second valve means operate as a first one-way valve and a second one-way valve, respectively, positioned at separate locations in the air chamber of the compressor body.

9. The tire as set forth in at least one of the claims 6 to 8 wherein the first valve means comprises a piston member seated within the air chamber of the compressor body, the piston member cyclically moving between open and closed positions synchronous with cyclic deformation of the containment body (44), and the piston member operatively opening and obstructing the inlet opening of the compressor body.

10. The tire as set forth in at least one of the previous claims wherein the containment body (44) has a curvature complimentary to a curvature of the sidewall (14) from radially outward of the containment body (44) to radially inward of the containment body (44).

11. The tire as set forth in at least one of the previous claims wherein the tire (12) is a self-inflating tire.

## Patentansprüche

1. Reifen mit einem Reifenhohlraum (30), einer ersten und einer zweiten Seitenwand (14), die sich jeweils von einem ersten und einem zweiten Reifenwulst (16) zu einer Reifenlauffläche (18) erstrecken, wobei der Reifen (12) ein an dem Reifen (12) in dem Reifenhohlraum (30) montiertes Kompressionsbetätigungsmittel (19) zur Zufuhr von Luft zu dem Reifenhohlraum (30) umfasst, wobei das Kompressionsbetätigungsmittel (19) einen Behälterkörper (44) umfasst, der aus einer elastischen verformbaren Werkstoffzusammensetzung gebildet ist und eine Quantität eines nicht-komprimierbaren Mediums (48) enthält, wobei der Behälterkörper (44) dazu ausgebildet ist, sich wechselseitig zwischen einem verformten Zustand und einem nicht-verformten Zustand umzuformen, in Reaktion auf eine Verformung und Rückfederung des Reifens (12), wenn der Reifen (12) unter Last rotiert, und wobei der Behälterkörper (44) im verformten Zustand dazu ausgebildet ist, eine Quantität des nicht-komprimierbaren Mediums (48) zu verlagern, um eine Kompressionskraft zu erzeugen, um dem Reifenhohlraum (30) ein Luftvolumen zuzuführen, wobei der Behälterkörper (44) so geformt ist, dass er das Schwenken während der Rotation des Reifens (12) erleichtert,
**dadurch gekennzeichnet, dass**
(i) der Behälterkörper (44) einen ersten linearen Bereich und einen zweiten linearen Bereich aufweist, die beide dem Reifenhohlraum (30) zugewandt sind, wobei die Verknüpfung der zwei linearen Bereiche das Schwenken des Behälterkörpers (44) und die Kompression des Mediums (48) erleichtert, wenn die Seitenwand (14) sich proximal zu einer Aufstandsfläche des Reifens (12) befindet; oder
(ii) der Behälterkörper (44) einen ersten gekrümmten Bereich, einen zweiten gekerbten Bereich und einen dritten linearen Bereich aufweist, die alle dem Reifenhohlraum (30) zugewandt sind, wobei der zweite gekerbte Bereich das Schwenken des Behälterkörpers (44) und die Kompression des Mediums (48) erleichtert, wenn die Seitenwand (14) sich proximal zu einer Aufstandsfläche des Reifens (12) befindet; oder
(iii) der Behälterkörper (44) innere gekerbte Bereiche und äußere gekerbte Bereiche aufweist, wobei die inneren und äußeren gekerbten Bereiche das Schwenken des Behälterkörpers (44) und die Kompression des Mediums (48) erleichtern, wenn die Seitenwand (14) sich proximal zu einer Aufstandsfläche des Reifens (12) befindet; oder
(iv) der Reifen weiter ein Klemmelement (191) umfasst zur Erleichterung des Schwenkens des Behälterkörpers (44) und der Kompression des Mediums (48), wenn die Seitenwand (14) sich proximal zu einer Aufstandsfläche des Reifens (12) befindet.

2. Reifen nach Anspruch 1, wobei der Behälterkörper (44) im Betrieb einer zyklischen Verformung zwischen dem verformten Zustand und dem nicht-verformten Zustand innerhalb einer Rotation des Reifens (12) unterzogen wird.

3. Reifen, wie in Anspruch 1 oder 2 dargelegt, wobei die zyklische Verformung des Behälterkörpers (44) in entweder einer Vorwärts- oder einer Rückwärtsrichtung der Reifenrotation stattfindet.

4. Reifen, wie in mindestens einem der vorhergehenden Ansprüche dargelegt, weiter ein an dem Reifen (12) montiertes Druckbegrenzungsventil umfassend zum Ablassen von Luft aus dem Reifenhohlraum (30), falls der Luftdruck im Reifenhohlraum einen voreingestellten Reifenfülldruck übersteigt.

5. Reifen, wie in mindestens einem der vorhergehenden Ansprüche dargelegt, wobei die Verformung des Behälterkörpers (48) durch ein Biegen von einer der ersten und der zweiten Seitenwand (14) veranlasst wird.

6. Reifen, wie in mindestens einem der vorhergehenden Ansprüche dargelegt, weiter eine Pumpenanordnung (120) umfassend, die an einer der ersten und der zweiten Seitenwand (14) befestigt ist, wobei die Pumpenanordnung (120) einen Verdichterkörper umfasst, der an dem Behälterkörper (44) befestigt ist und eine Luftkammer aufweist, wobei die Luftkammer eine Einlassöffnung zur Gewährung von Luftzutritt in die Luftkammer und eine Auslassöffnung zum Leiten von Luft von der Luftkammer zu dem Reifenhohlraum (30) aufweist, wobei der Verdichterkörper weiter ein erstes Ventilmittel und ein zweites Ventilmittel bevorzugt in dem Verdichterkörper, zum wechselseitigen Öffnen und Schließen der Einlassöffnung beziehungsweise der Auslassöffnung synchron zur zyklischen Verformung des Behälterkörpers (44), umfasst.

7. Reifen, wie in Anspruch 6 dargelegt, weiter ein Druckbegrenzungsventilmittel umfassend zum Ablassen von Luft aus dem Reifenhohlraum (30), falls der Luftdruck in dem Reifenhohlraum (30) einen vorbestimmten Druck überschreitet, wobei das Druckbegrenzungsventilmittel an dem Verdichterkörper befestigt ist und ein Druckbegrenzungsventil und einen Luftstromdurchgang von dem Druckbegrenzungsventil umfasst, die dazu angeordnet sind, im Betrieb Luft in umgekehrter Strömungsrichtung von dem Reifenhohlraum (30) durch den Verdichterkörper und aus der Einlassöffnung des Verdichterkörpers strömen zu lassen.

8. Reifen, wie in Anspruch 6 oder 7 dargelegt, wobei das erste und das zweite Ventilmittel als erstes Rückschlagventil beziehungsweise zweites Rückschlagventil wirken, die an separaten Stellen in der Luftkammer des Verdichterkörpers angeordnet sind.

9. Reifen, wie in mindestens einem der Ansprüche 6 bis 8 dargelegt, wobei das erste Ventilmittel ein in der Luftkammer des Verdichterkörpers gelagertes Kolbenelement umfasst, wobei das Kolbenelement sich zyklisch zwischen einer offenen und einer geschlossenen Position bewegt, synchron zur zyklischen Verformung des Behälterkörpers (44), und das Kolbenelement wirksam die Einlassöffnung des Verdichterkörpers öffnet und blockiert.

10. Reifen, wie in mindestens einem der vorhergehenden Ansprüche dargelegt, wobei der Behälterkörper (44) eine Krümmung aufweist, die komplementär zu einer Krümmung der Seitenwand (14) von radial auswärts von dem Behälterkörper (44) zu radial einwärts von dem Behälterkörper (44) ist.

11. Reifen, wie in mindestens einem der vorhergehenden Ansprüche dargelegt, wobei der Reifen (12) ein selbstaufblasender Reifen ist.

## Revendications

1. Bandage pneumatique possédant une cavité de bandage pneumatique (30), des premier et deuxième flancs (14) s'étendant respectivement à partir de premier et deuxième talons de bande de roulement (16) jusqu'à une bande de roulement (18) de bandage pneumatique, le bandage pneumatique (12) comprenant un moyen d'actionnement par compression (19) monté sur le bandage pneumatique (12) au sein de la cavité de bandage pneumatique (30) pour distribuer de l'air à la cavité de bandage pneumatique (30), le moyen d'actionnement par compression (19) comprenant un corps de confinement (44) réalisé à partir d'une composition de matière déformable résiliente et contenant une quantité d'un milieu non compressible (48), dans lequel le corps de confinement (44) est configuré pour se transformer de manière réciproque entre un état déformé et un état non déformé en réponse à une déformation et à une récupération du bandage pneumatique (12) lorsque le bandage pneumatique (12) est mis en rotation sous charge, et dans lequel le corps de confinement (44), à l'état déformé, est configuré pour déplacer une quantité du milieu non compressible (48) pour générer une force de compression destinée à distribuer un volume d'air à la cavité de bandage pneumatique (30), le corps de confinement (44) étant configuré pour faciliter son pivotement au cours de la rotation du bandage pneumatique (12), **caractérisé en ce que** :
(i) le corps de confinement (44) possède une première zone linéaire et une deuxième zone linéaire faisant face toutes deux à la cavité de bandage pneumatique (30), la conjonction des deux zones linéaires facilitant le pivotement du corps de confinement (44) et la compression du milieu (48) lorsque le flanc (14) se trouve à proximité d'une empreinte du bandage pneumatique (12) ; ou
(ii) le corps de confinement (44) possède une première zone courbe, une deuxième zone comportant une encoche et une troisième zone linéaire, faisant face toutes trois à la cavité de bandage pneumatique (30), la deuxième zone comportant une encoche facilitant le pivotement du corps de confinement (44) et la compression du milieu (48) lorsque le flanc (14) se trouve à proximité d'une empreinte du bandage pneumatique (12) ; ou
(iii) le corps de confinement (44) possède des zones internes munies d'encoches et des zones externes munies d'encoches, les zones internes et externes munies d'encoches facilitant le pivotement du corps de confinement (44) et la compression du milieu (48) lorsque le flanc (14) se trouve à proximité d'une empreinte du bandage pneumatique (12) ; ou
(iv) le bandage pneumatique comprend également un membre de serrage 191 pour faciliter le pivotement du corps de confinement (44) et la compression du milieu (48) lorsque le flanc (14) se trouve à proximité d'une empreinte du bandage pneumatique (12).

2. Bandage pneumatique selon la revendication 1, dans lequel le corps de confinement (44) subit de manière opérationnelle une déformation cyclique entre l'état déformé et l'état déformé au cours d'une rotation du bandage pneumatique (12).

3. Bandage pneumatique selon la revendication 1 ou 2, dans lequel la déformation cyclique du corps de confinement (44) a lieu dans la direction de rotation soit vers l'avant, soit vers l'arrière.

4. Bandage pneumatique selon au moins une des revendications précédentes, comprenant en outre une soupape de décharge montée sur le bandage pneumatique (12) pour libérer de l'air à partir de la cavité de bandage pneumatique (30) dans le cas où la pression de l'air dans la cavité du bandage pneumatique dépasse une pression de gonflage de bandage pneumatique préréglée.

5. Bandage pneumatique selon au moins une des revendications précédentes, dans lequel une déformation du corps de confinement (48) est induite par un fléchissement d'un des flancs choisi parmi le premier et le deuxième flanc (14).

6. Bandage pneumatique selon au moins une des revendications précédentes, comprenant en outre un assemblage de pompe (120) fixé à un des flancs choisi parmi le premier et le deuxième flanc (14), l'assemblage de pompe (120) comprenant un corps de compression fixé au corps de confinement (44) et possédant une chambre à air, la chambre à air possédant une ouverture d'entrée pour l'admission d'air dans la chambre à air et une ouverture de sortie pour acheminer de l'air depuis la chambre à air jusqu'à la cavité de bandage pneumatique (30), le corps de compression comprenant en outre un premier moyen faisant office de soupape et un deuxième moyen faisant office de soupape, de préférence au sein du corps de compression, pour l'ouverture et la fermeture réciproque de l'ouverture d'entrée et de l'ouverture de sortie, respectivement, de manière synchrone avec une déformation cyclique du corps de confinement (44).

7. Bandage pneumatique selon la revendication 6, comprenant en outre un moyen faisant office de soupape de décharge pour libérer de l'air à partir de la cavité de bandage pneumatique (30) dans le cas où la pression de l'air au sein de la cavité de bandage pneumatique (30) dépasse une pression prédéterminée, le moyen faisant office de soupape de décharge étant fixé au corps de compression et comprenant une soupape de décharge et un passage d'écoulement pour l'air à partir de la soupape de décharge, positionné pour renvoyer de manière opérationnelle de l'air qui s'écoule à partir de la cavité de bandage pneumatique (30) à travers le corps de compression et à l'extérieur de l'ouverture d'entrée du corps de compression.

8. Bandage pneumatique selon la revendication 6 ou 7, dans lequel le premier et le deuxième moyen faisant office de soupapes travaillent sous la forme d'une première soupape unidirectionnelle et d'une deuxième soupape unidirectionnelle, respectivement, qui sont disposées à des endroits séparés dans la chambre à air du corps de compression.

9. Bandage pneumatique selon au moins une des revendications 6 à 8, dans lequel le premier moyen faisant office de soupape comprend un membre faisant office de piston logé au sein de la chambre à air du corps de compression, le membre faisant office de piston se déplaçant de manière cyclique entre une position ouverte et une position fermée de manière synchrone avec une déformation cyclique du corps de confinement (44), et le membre faisant office de piston ouvrant et obstruant de manière opérationnelle l'ouverture d'entrée du corps de compression.

10. Bandage pneumatique selon au moins une des revendications précédentes, dans lequel le corps de confinement (44) possède une courbure complémentaire à une courbure du flanc (14) depuis un endroit situé à l'extérieur en direction radiale du corps de confinement (44) jusqu'à un endroit situé à l'intérieur en direction radiale du corps de confinement (44).

11. Bandage pneumatique selon au moins une des revendications précédentes, dans lequel le bandage pneumatique (12) est un bandage pneumatique du type à gonflage automatique.
